# EUROPÄISCHE PATENTSCHRIFT

(11) **EP 3 948 973 B1**
(45) Veröffentlichungstag und Bekanntmachung des Hinweises auf die Patenterteilung: **17.09.2025**
(21) Anmeldenummer: 20714997.2
(22) Anmeldetag: 25.03.2020
(51) Int. Cl.: H01M 10/625, H01M 10/658, B60L 50/64, H01M 50/204, H01M 50/24, H01M 50/271, B60L 3/00, B60L 50/60

(54) **BATTERIEKASTEN**
BATTERY CASE
BOÎTIER DE BATTERIE

(30) Priorität: 25.03.2019 DE 202019101682 U
(43) Veröffentlichungstag der Anmeldung: 09.02.2022
(73) Patentinhaber: REINZ-Dichtungs-GmbH, 89233 Neu-Ulm (DE)
(72) Erfinder: SCHWEIGGART, Franz, 89284 Pfaffenhofen (DE); RITZAL, Axel, 89233 Neu-Ulm (DE); RUED, Manfred, 89250 Senden (DE)
(74) Vertreter: Pfenning, Meinig & Partner mbB
(86) Internationale Anmeldenummer: PCT/EP2020/058284
(87) Internationale Veröffentlichungsnummer: WO 2020/193600

(56) Entgegenhaltungen:
- EP-A1- 2 610 943
- DE-A1- 102009 028 920
- DE-A1- 102010 013 150
- DE-A1- 102016 008 222
- DE-U1- 202012 007 545
- US-A- 5 084 313

## Beschreibung

Die vorliegende Erfindung betrifft einen Batteriekasten für eine Traktionsbatterie, wie er zur Halterung von Traktionsbatterien in Fahrzeugen eingesetzt wird.

Batteriekästen, auch Batterieboxen genannt, für Traktionsbatterien weisen üblicherweise zwei miteinander verbundene Gehäuseteile auf, ein Unterteil in Form einer Wanne und ein Oberteil in Form eines Deckels. Beide Gehäuseteile werden zusammengefügt und schließen die Traktionsbatterie ein. Die Traktionsbatterie selbst besteht üblicherweise aus einer Vielzahl von einzelnen Batteriezellen (Batteriemodulen), die nebeneinander und/oder übereinander angeordnet sind.

Problematisch bei Traktionsbatterien ist insbesondere die Gefahr eines thermischen Runaway, i. e. eine Thermalpropagation von Zelle zu Zelle, von defekten Zellen und hierdurch eine extreme kurzfristige Erhitzung des Batteriekastens, was zu einem Durchschlagen von Flammen durch den Batteriekasten nach außen führen kann.

Üblicherweise werden daher insbesondere Hochvolt-Batterie-Boxen mit hochtemperaturbeständigen Materialien ausgekleidet. Derartige Materialien weisen jedoch üblicherweise nur einen geringen oder gar keinen mechanischen Schutz auf. Weiterhin sind sie nur schwer in einer 3D-Form zu halten, so dass die Schutzwirkung im Laufe der Zeit unter der mechanischen Belastung des Batteriekastens im Fahrzeugbetrieb abnimmt.

Die DE 10 2009 028 920 A1 offenbart eine wiederaufladbare Batterie, die mehrere nebeneinander angeordnete Batterieelemente und mindestens ein Wärmeisolationsmittel umfasst, wobei das mindestens eine Wärmeisolationsmittel zwischen zwei benachbart angeordneten Batterieelemente zum Reduzieren eines Wärmetransports zwischen den benachbarten Batterieelementen angeordnet ist.

Die DE 10 2010 013 150 A1 offenbart eine Vorrichtung zur thermischen Isolierung mindestens einer Fahrzeugbatterie, wobei die Vorrichtung mindestens ein erstes Gehäuse zur Aufnahme der mindestens einen Fahrzeugbatterie umfasst, wobei das erste Gehäuse mindestens ein Bodenteil, mindestens ein Seitenteil und mindestens ein Oberteil umfasst, wobei mindestens auf dem Bodenteil mindestens ein Abstandshalter angeordnet ist. Die mindestens eine Fahrzeugbatterie wird mittels des mindestens einen Abstandshalters beabstandet von einer Innenfläche des Bodenteils und von einer Innenfläche des mindestens einen Seitenteils und von einer Innenfläche des mindestens einen Oberteils angeordnet.

Die US 5,084,313 A zeigt ein Isolationsmaterial mit einer Abfolge von dünnen reflektierenden Folien und dünnen isolierenden Schichten.

Die EP 2 610 943 A1 offenbart eine Batterie mit einem Gehäuse. Zwischen der Batteriezelle und dem Gehäusedeckel ist eine unter Druck stehende Isolationsschicht angeordnet.

Die DE 20 2012 007 545 U1 offenbart einen Hitzeschild zur Abschirmung heißer Bereiche mit einem Gehäuse mit mindestens zwei metallischen Lagen, die zumindest abschnittsweise an ihren Rändern formschlüssig und/oder stoffschlüssig und/oder kraftschlüssig miteinander verbunden sind, und einer zwischen den beiden metallischen Lagen zumindest bereichsweise angeordneten Isolierlage aus verdichtetem Isoliermaterial.

Die DE 10 2016 008 222 A1 offenbart eine Traktionsbatterie mit mehreren miteinander verschalteten Batteriezellen, die jeweils in einem Zellengehäuse einander abwechselnd angeordnete positive und negative Elektrodenplatten aufweisen, und mit mehreren Batterietrögen, die jeweils der Aufnahme einer Mehrzahl von Batteriezellen dienen, wobei ein jeder Batterietrog elektrolytfest und dicht ausgebildet ist sowie mit einem die Batterietröge aufnehmenden Batteriekasten, wobei benachbarte Batterietröge unter Belassung eines Spaltraums beabstandet zueinander angeordnet sind.

Aufgabe der vorliegenden Erfindung ist es daher, einen Batteriekasten zur Verfügung zu stellen, der ein Durchschlagen von Flammen und Partikeln aus dem Batteriekasten nach außen verhindert oder zumindest stark verzögert, günstig herzustellen ist und auch langfristig die Sicherheit des Batteriekastens gewährleistet.

Diese Aufgabe wird durch den Batteriekasten nach Anspruch 1 gelöst. Vorteilhafte Weiterbildungen des erfindungsgemäßen Batteriekastens werden in den abhängigen Ansprüchen gegeben.

Der erfindungsgemäße Batteriekasten weist wie im Stand der Technik üblich eine Unterseite, meist als Wanne ausgebildet und im Folgenden auch gelegentlich so bezeichnet, und eine Oberseite, meist als Deckel ausgebildet und im Folgenden auch gelegentlich so bezeichnet, auf. In dem Batteriekasten ist eine Vielzahl von Batteriemodulen angeordnet.

Der erfindungsgemäße Batteriekasten ist nun so ausgestaltet, dass er eine hohe Temperaturbeständigkeit mit einem hohen mechanischen Schutz aufweist und zuverlässig das Durchschlagen von Flammen aus dem Batteriekasten nach außen verzögert oder vollständig verhindert.

Hierzu wird in dem Batteriekasten zwischen den Batteriemodulen und der Oberseite, d. h. dem Deckel, ein mindestens zweilagiges flächiges Abschirmelement angeordnet. Ein derartiges Abschirmelement kann zur Abschirmung auch zwischen zwei Batteriemodulen angeordnet werden. Die Batteriemodule können dabei in dem Batteriekasten horizontal nebeneinander, vertikal nebeneinander oder anderweitig einander benachbart angeordnet sein. Erfindungsgemäß weist das Abschirmelement eine erste äußere metallische Lage und eine zweite äußere metallische Lage, beispielsweise aus einem Metallblech, auf, wobei mindestens eine metallische, im Folgenden als zweite äußere Lage bezeichnete Lage der äußeren Lagen aus einem Stahl mit einem Schmelzpunkt Tₛ ≥ 1000°C besteht oder dieses aufweist, beispielsweise einem Stahlblech. Das Abschirmelement wird dabei so angeordnet, dass die zweite äußere Lage aus Stahl einem Batteriemodul benachbart angeordnet ist.

Durch die zweilagige Ausführung wird ausgehend von dem abgeschirmten Batteriemodul die Umgebung des Batteriemoduls auf der gegenüberliegenden Seite des Abschirmelementes wirksam vor hohen Temperatureinwirkungen abgeschirmt. Befindet sich ein Abschirmelement zwischen zwei Batteriemodulen, so wird ein Durchschlag der Wärmeentwicklung von einem Batteriemodul zum benachbarten Batteriemodul stark verzögert oder verhindert. Dies behindert dadurch das Übergreifen einer Überhitzung eines Batteriemoduls (ein sog. "thermischer Runaway") auf das benachbarte Batteriemodul.

Dadurch, dass das Abschirmelement zwischen den Batteriemodulen und der Oberseite des Batteriekastens (dem Deckel) angeordnet ist, kann ein Übergreifen der Hitzeentwicklung auf den Batteriedeckel und von dort dann ggf. weiter in das Fahrzeug verhindert oder zumindest stark verzögert werden. Dadurch, dass die dem abgeschirmten Batteriemodul benachbarte zweite äußere Lage aus einem Stahl mit einem Schmelzpunkt Tₛ ≥ 1000°C besteht oder dieses aufweist, ist das Abschirmelement selbst sehr temperaturbeständig.

Die erste Lage, die der zweiten äußeren Lage gegenüberliegt, besteht aus Stahl, insbesondere aus Stahlblech. Die erste äußere Lage, die der Oberseite des Batteriekastens benachbart und ihrerseits gegenüber den Batteriemodulen durch die zweite äußere Lage abgeschirmt ist, kann auch aus einem Leichtbaumaterial wie beispielsweise Aluminium hergestellt werden.

Damit wird gleichzeitig eine Vielzahl von Vorteilen neben der Erhöhung der Temperaturfestigkeit eines Batteriekastens erzielt.

Zum einen wird durch das zweilagige Abschirmelement eine sehr hohe thermische Abschirmung eines Batteriemoduls bzw. der Batteriemodule zu seiner Umgebung, z. B. einem weiteren Batteriemodul oder einer Oberseite eines Batteriekastens und damit zu einem Fahrzeug erzielt. Im regulären Betrieb dienen die sehr guten thermischen Isolationseigenschaften des Abschirmelementes dazu, die Batteriemodule wirksam in ihrem Nenntemperaturbereich zu halten und zu betreiben.

Die Verwendung von metallischen Lagen für das Abschirmelement ermöglicht es, das Abschirmelement perfekt an die 3D-Form der Oberseite des Batteriekastens, d. h. des Deckels/der Haube, anzupassen. Da das Abschirmelement selbsttragend ist, ist auch eine einfache Montage in der Haube möglich. Bei Verwendung eines Alubleches für die erste äußere Lage wird das Gewicht des Abschirmelementes stark reduziert. Dennoch ergibt sich eine hohe thermische Isolation sowohl im regulären Betrieb, als auch eine Beständigkeit gegenüber einer Beflammung oder Erhitzung mit hohen Temperaturen. Da bei einem thermischen Runaway einer Batteriezelle sehr hohe Temperaturen bis zu 1000°C und darüber auftreten können, sorgt die auch bei Temperaturen darüber thermisch beständige zweite äußere Lage dafür, dass der Gesamtbatteriekasten für einige Zeit, insbesondere vorteilhafterweise für mindestens 5 Minuten beständig ist. Ein Durchschlag des thermischen Runaway auf das Fahrzeug wird daher stark verzögert oder verhindert. Durch die Wahl von Metallen als Material der metallischen Lagen erfolgt zusätzlich ein mechanischer Schutz der Batteriemodule.

Erfindungsgemäß kann für die zweite äußere Lage ein Edelstahl, beispielsweise ein 1.4301-Stahl verwendet werden. Es ist auch möglich, einen aluminiumplattierten Stahl oder einen feueraluminierten Stahl für die zweite äußere Lage zu verwenden.

Insbesondere, aber nicht nur bei übereinander angeordnet (d. h. vertikal benachbarten) Batteriemodulen sind die erste und/oder die zweite äußere metallische Lage, bevorzugt beide, aus Edelstahl. Diese beiden Edelstahllagen schützen das Abschirmelement, ein benachbartes Batteriemodul sowie sich selbst gegenseitig für den Fall, dass eines der benachbarten Batteriemodule defekt ist und sich außergewöhnlich erhitzt. Außerdem können die Edelstahllagen unproblematisch das Gewicht eines oder mehrerer oben angeordneter Batteriemodule tragen.

Ist die erste äußere Lage ebenfalls aus Stahl, so können dieselben Materialien auch für die zweite äußere Lage eingesetzt werden. Ist die erste äußere Lage jedoch aus Aluminium, so können Aluminiumbleche unterschiedlicher Dicken eingesetzt werden. Üblicherweise ist dabei das Aluminiumblech der ersten äußeren Lage dicker als ein Stahlblech der zweiten äußeren Lage. Für die erste Lage werden Dicken D1 als maximale Dicken der Lage oder als durchschnittliche Dicke der Lage eingesetzt von 0,1 mm ≤ D1 ≤ 2,0 mm, vorteilhafterweise 0,3 mm ≤ D1 ≤ 0,6 mm. Die zweite Lage, die aus einem Stahlblech besteht oder dieses aufweist, besitzt eine Dicke als maximale Dicke der Lage oder als durchschnittliche Dicke der Lage D2 mit 0,1 mm ≤ D2 ≤ 1,0 mm, vorteilhafterweise 0,1 mm ≤ D2 ≤ 0,3 mm, insbesondere eine Dicke von D2 = 0,15 mm.

Eine oder beide der ersten äußeren Lage und der zweiten äußeren Lage können perforiert, insbesondere mikroperforiert, gelocht oder noppaliert sein. Hierdurch ist es möglich, beispielsweise den Schallschutz durch das Abschirmelement weiter zu verbessern und weitere Gewichtsreduktion zu erreichen.

Es ist nicht unbedingt erforderlich, dass sich zwischen der ersten äußeren Lage und der zweiten äußeren Lage eine weitere Isolationsschicht befindet. Jedoch ist es vorteilhaft, wenn eine derartige Isolationsschicht zwischen den beiden äußeren Lagen eingebracht wird. Für diese Isolationsschicht ist es vorteilhaft, wenn sie aus einem Material besteht oder dieses enthält, das bis mindestens 600°C stabil ist. Dies wird beispielsweise durch Fasermaterialien wie Glasfaser, Steinwolle, Silikatfasern oder auch durch Glimmer erfüllt. Auch mit Aluminium bedampfte Glasfasern eignen sich als Material der Isolationsschicht. Weiterhin sind gegebenenfalls auch entsprechend ausgerüstete Pappen, die Füllstoffe, Bindemittel und weitere Bestandteile enthalten als Isolationsschicht geeignet. Hierbei können Pappen verwendet werden, wie sie üblicherweise in Hitzeschilden von Verbrennungsmotoren eingesetzt werden.

Die Isolationslage braucht nicht selbsttragend zu sein, so dass insbesondere eine bindemittelfreie Isolationslage verwendet werden kann. Die mechanische Stabilität der Isolationslage wird durch die Einbettung zwischen die beiden äußeren Lagen gewährleistet. Durch diesen nun mindestens dreischichtigen Aufbau des Abschirmelementes wird auch verhindert, dass die Isolationslage im Laufe des Betriebs des Fahrzeugs mechanisch zerstört wird und vom Abschirmelement abgetragen wird. Zwar können die einzelnen Fasern und dergleichen der Isolationslage sich im Laufe des Betriebs des Fahrzeugs voneinander lösen oder brechen. Da sie jedoch zwischen den beiden äußeren metallischen Lagen hinreichend eingeschlossen sind, bleiben sie an ihrer Position und tragen weiterhin zur Isolationswirkung des Abschirmelementes bei.

Eine oder beide der äußeren Lagen können weiterhin noppaliert und/oder gelocht sein oder jede anderweitig geprägte Strukturen, beispielsweise Sicken und dergleichen, aufweisen, auch unterschiedliche Strukturierungen in Kombination. Durch eine derartige Strukturierung der Oberfläche wird die jeweilige äußere Lage vom benachbarten Bauteil, beispielsweise dem Batteriekastendeckel, beabstandet gehalten, so dass sich zwischen diesen ein weiterer thermisch isolierender Luftspalt bilden kann.

Eine oder beide äußere Lagen können auch unter Ausbildung von Durchgangsöffnungen gelocht bzw. perforiert sein, beispielsweise in Form eines Spießblechs. Dabei kann die Isolationsschicht auch diese Durchgangsöffnungen durchgreifen und so an der jeweiligen Lage verankert sein. Eine derartige Lage kann auch zumindest bereichsweise in das Material der Isolationsschicht eingebettet sein, z. B. als ein in eine aus mit NBR gebundenem Glimmer bestehende Isolationsschicht eingebettetes Spießblech.

Dadurch, dass das Abschirmelement in 3D-Form passend zum Deckel oder passend zum Batteriemodul vorgeformt werden kann, ist es nicht unbedingt erforderlich, das Abschirmelement mit einem benachbarten Bauteil fest zu verbinden, beispielsweise zu verschrauben, vernieten, zu verklemmen und dergleichen. Oftmals genügt es, das Abschirmelement lose in den Batteriekasten in seiner Position einzulegen, da es durch seine 3D-Form an der korrekten Position gehalten wird.

Der erfindungsgemäße Batteriekasten wird folglich wirksam bezüglich mechanischer Belastungen und seiner thermischen Isolationseigenschaften durch das erfindungsgemäße Abschirmelement, das an die Anforderungen eines Batteriekastens einer Traktionsbatterie bzw. an die Anforderungen bei Traktionsbatterien angepasst ist, verbessert. Diese Verbesserung wird insbesondere kostengünstig und mit minimalem zusätzlichem Gewicht realisiert.

Im Folgenden werden einige Beispiele erfindungsgemäßer Batteriekästen gegeben. Dabei werden für gleiche und ähnliche Bauelemente durchgängig gleiche und ähnliche Bezugszeichen verwendet, so dass auf deren Wiederholung und Beschreibung ggf. verzichtet wird. In den nachfolgenden Beispielen wird eine Vielzahl von Verbesserungen der vorliegenden Erfindung und Weiterbildungen beschrieben, die jeweils auch für sich die vorliegende Erfindung weiterbilden können oder auch in Kombination mit anderen weiterbildenden Maßnahmen desselben Beispiels oder anderer Beispiele kombiniert werden können.

Es zeigen
- Fig. 1: in den drei Teilbildern A, B und C die Anordnung und den Aufbau eines erfindungsgemäßen Batteriekastens;
- Fig. 2: die Anordnung von Batteriezellen in einem Batteriekasten;
- Fig. 3: einen Querschnitt durch ein Abschirmelement eines erfindungsgemäßen Batteriekastens;
- Fig. 4-6: Querschnitte durch weitere Abschirmelemente erfindungsgemäßer Batteriekästen;
- Fig. 7: Beispiele verschiedener Materialien zur Verwendung als Lagen in Abschirmelementen erfindungsgemäßer Batteriekästen;
- Fig. 8: eine Anordnung von Batteriezellen in einem Batteriekasten über- einander;
- Fig. 9: einen Querschnitt durch das in Fig. 8 verwendete Abschirmelement; und
- Fig. 10: einen Querschnitt durch ein weiteres Abschirmelement.

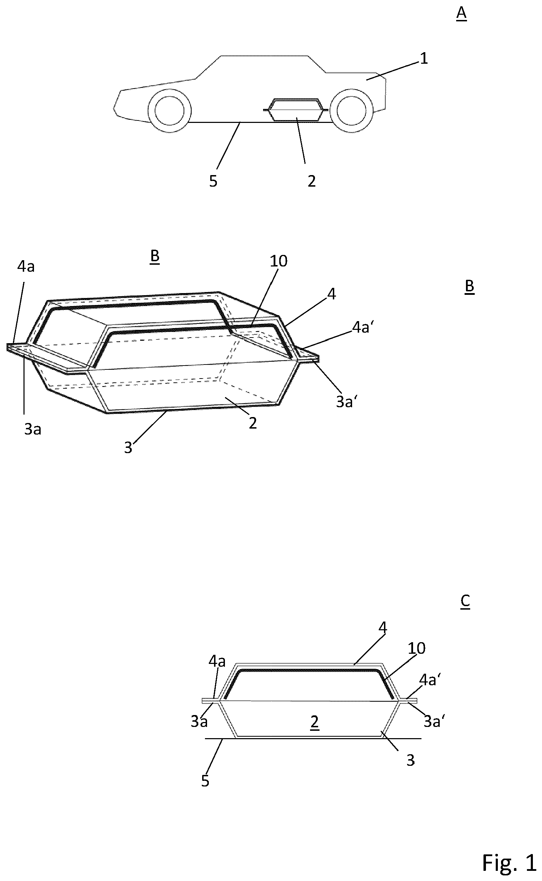

Fig. 1 zeigt ein Fahrzeug 1 mit einem Batteriekasten (Batteriebox) 2, der auf einem Unterboden 5 eines Fahrzeugs montiert ist.

Fig. 1A zeigt dabei das Fahrzeug 1, während Fig. 1B und 1C eine perspektivische Ansicht in Durchsicht bzw. eine Draufsicht auf einen Querschnitt durch den Batteriekasten zeigen.

Gemäß der Teilfiguren 1A, 1B und 1C besitzt der Batteriekasten 2 eine Unterseite in Form einer Wanne 3 und eine Oberseite in Form eines Batteriedeckels 4. Sowohl die Wanne 3 als auch der Deckel 4 weisen Flansche 3a, 4a bzw. 3a', 4a' auf, die jeweils paarweise aufeinanderliegen und an denen die Wanne 3 mit dem Deckel 4 verbunden ist. Auf der Innenseite des Deckels 4 ist ein Abschirmelement 10 angeordnet, das den Deckel 4 oberseitig weitgehend auskleidet und eine 3D-Form aufweist, die der 3D-Form des Deckels 4 entspricht.

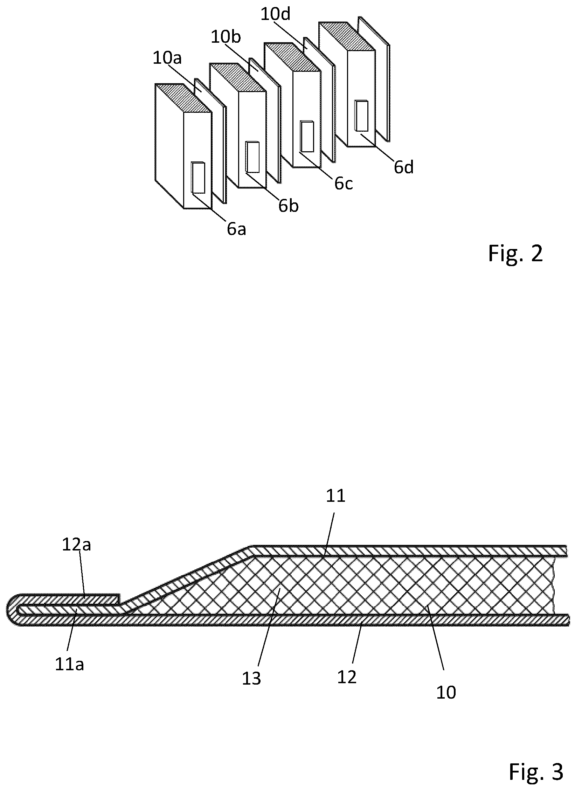

Fig. 2 zeigt eine weitere erfindungsgemäße Anordnung, bei der Abschirmelemente 10a, 10b, 10c zwischen einzelnen Batteriezellen 6a, 6b, 6c und 6d einer Traktionsbatterie angeordnet sind.

In Fig. 1 ist also eine Abschirmung des Inneren eines Batteriekastens, in dem eine Traktionsbatterie (nicht dargestellt) angeordnet ist, nach oben in Richtung des Innenraums des Fahrzeugs 1 dargestellt, während in Fig. 2 eine thermische Abschirmung zwischen einzelnen Batteriezellen einer Traktionsbatterie, die in einem entsprechenden Batteriekasten wie in Fig. 1 dargestellt angeordnet sind, gezeigt wird.

Fig. 3 zeigt einen Querschnitt im Ausschnitt durch ein Abschirmelement 10 eines erfindungsgemäßen Batteriekastens. Hier wie auch bei den nachfolgenden Figuren kann das Abschirmelement 10 sowohl zur Abschirmung zwischen einer Traktionsbatterie und einem Deckel 4 eines Batteriekastens 2 als auch zur Abschirmung zwischen zwei Batteriezellen innerhalb eines Batteriekastens 2 eingesetzt werden.

In Fig. 3 weist das Abschirmelement 10 eine erste Lage 11 aus einem 0,4 mm starken Aluminiumblech, eine zweite Lage 12 aus einem 0,2 mm starken Edelstahlblech und eine dritte Lage 13 als Isolationslage auf. Die dritte Lage 13 besteht aus Glimmer.

Die beiden Lagen 11 und 12 sind an ihren Rändern derart ausgestaltet, dass die Lage 11 einen Flansch 11a und die Lage 12 einen Bördel 12a aufweist, die flach aufeinander aufliegen, wobei der Bördel 12a den Flansch 11a umgreift und so das Abschirmelement 10 nach außen vollständig abschließt. Dadurch wird der Glimmer der Lage 13 vollständig zwischen den Lagen 11 und 12 eingeschlossen und kann auch bei Verlust seiner eigenen inneren mechanischen Stabilität das Abschirmelement 10 nicht verlassen.

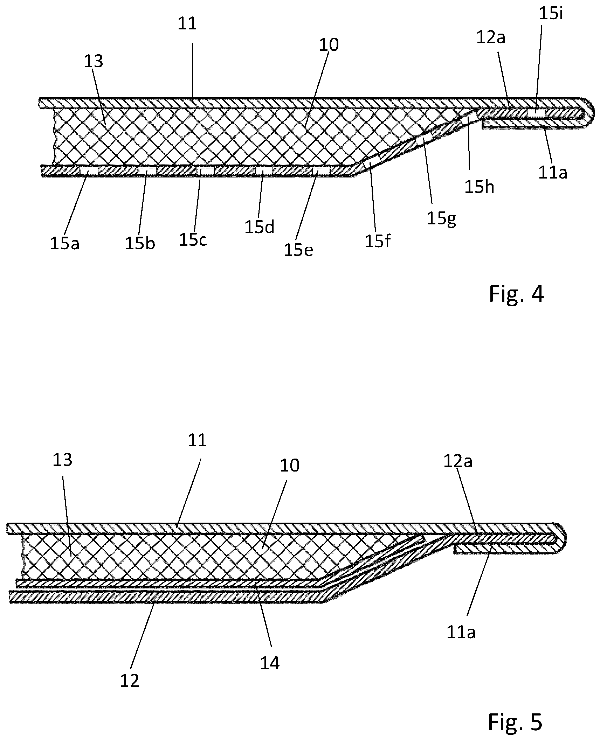

Fig. 4 zeigt ein weiteres Beispiel eines Abschirmelementes 10 zum Einsatz bei erfindungsgemäßen Batteriekästen.

Das Abschirmelement 10 ist ähnlich ausgestaltet wie dasjenige in Fig. 3. Nunmehr ist jedoch die erste Lage 11 aus einem 0,4 mm starken Aluminiumblech, die zweite Lage 12 aus einem 0,2 mm starken Edelstahl-Lochblech oder einem Edelstahlgewebe oder einem Edelstahlgitter dieser Dicke. Die zweite Lage 12 weist folglich Öffnungen 15a bis 15i, sowie weitere nicht dargestellte Öffnungen auf, die regelmäßig beabstandet sind und es ermöglichen, dass Wärme wie auch Schall durch die Öffnungen 15a bis 15i in die dritte Lage 13 eintritt. Die dritte Lage 13 ist eine Glasmatte, beispielsweise aus ECR-Glas oder Silikatglasfasern mit einem Flächengewicht beispielsweise von 650 g/m² und einer Dicke von 4 mm an der dicksten Stelle.

Die Lage 11 ist aus Aluminiumblech, während die Lage 12 aus einem Edelstahl besteht und als Beflammseite thermisch besonders widerstandsfähig ist.

Bei der Ausführungsform der Fig. 4 weist nun die zweite Lage 12 einen Flansch 12a und die erste Lage 11 einen Bördel 11a auf, der den Flansch 12a umgreift und so die erste Lage 11 mit der zweiten Lage 12 mechanisch verbindet;

Fig. 5 zeigt ein weiteres Abschirmelement eines erfindungsgemäßen Batteriekastens, das ähnlich ausgebildet ist wie dasjenige in Fig. 4. Abweichend zu Fig. 4 ist die erste Lage nun aus Aluminium oder feueraluminiertem Stahl (FAL) oder aluminiumplattiertem Stahl (ALP) oder Edelstahl. Die zweite Lage besteht aus einem Edelstahlblech mit einer Stärke von 0,2 mm.

Auf der der zweiten Lage 12 zugewandten Seite der Isolationslage 13 ist nun eine weitere Lage 14 angeordnet aus einem Streckmetall oder einer noppalierten Metalllage. Diese dient einer weiteren Verstärkung des Schutzes gegenüber thermischen Durchschlägen sowie als mechanische Verstärkung des Abschirmelementes.

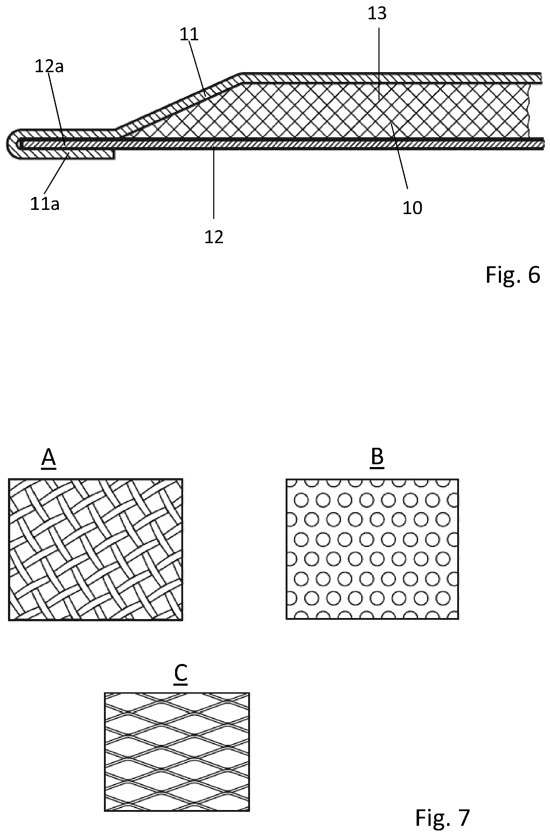

Fig. 6 zeigt ein weiteres Beispiel eines Abschirmelementes für einen erfindungsgemäßen Batteriekasten entsprechend demjenigen in Fig. 3.

Während in Fig. 3 der Bördel 12a den Flansch 11a in Richtung der dem Batteriekastendeckel zugewandten Seite umgreift, ist in Fig. 6 die erste Lage 11 mit einem Bördel 11a und die zweite Lage 12 mit einem Flansch 12a versehen, wobei der Bördel 11a den Flansch 12a in Richtung der Innenseite des Batteriekastens umgreift.

Fig. 7 zeigt Beispiele verschiedener spezieller und geeigneter Materialien für die Lagen 11, 12, 13 und 14 in den vorhergehenden Beispielen der Figuren 1 bis 6. Fig. 7A zeigt ein Gewebe oder Gitter, beispielsweise aus Edelstahl, Fig. 7B zeigt ein Lochblech und Fig. 7C ein Streckmetall, die jeweils für diese Lagen, insbesondere jedoch für die zweite Lage 12 und die zusätzliche Zwischenlage 14 eingesetzt werden können.

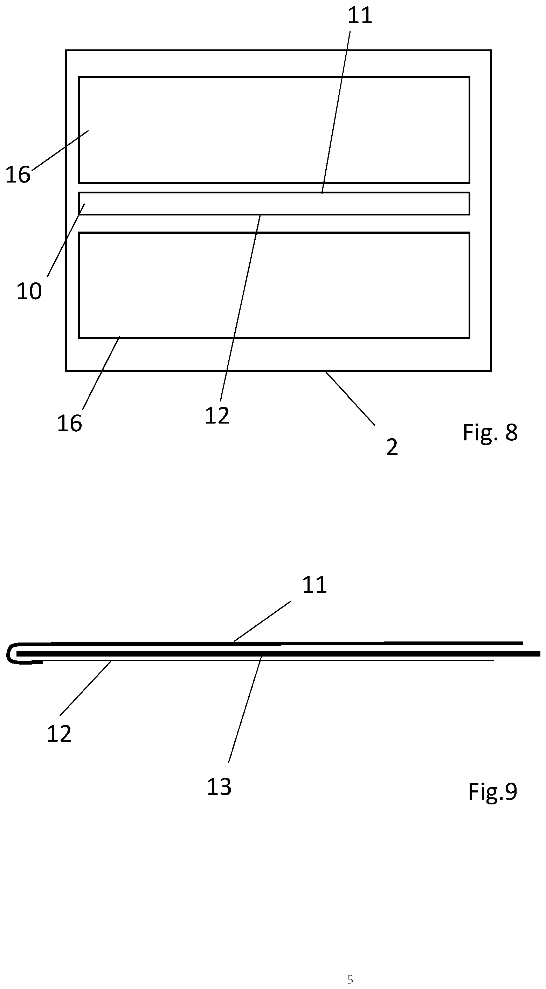

Fig. 8 zeigt einen Batteriekasten 2 im Querschnitt. In diesem sind vertikal übereinander angeordnet 2 Batteriemodule 16 angeordnet, zwischen denen ein Abschirmelement 10 angeordnet ist.

Fig. 9 zeigt den Aufbau dieses Abschirmelements 10 im Querschnitt. Es weist eine erste äußere metallische Lage 11 aus Edelstahl und eine zweite äußere metallische Lage 12 aus Aluminium auf. Die Lage 11 ist an ihrem Rand um die Außenkante der Lage 12 umgebördelt und so mit dieser verbunden. Zwischen den Lagen 11 und 12 ist eine Isolationsschicht 13 aus Glasfasern vorgesehen, wobei die Glasfasern mit Aluminium bedampft sind.

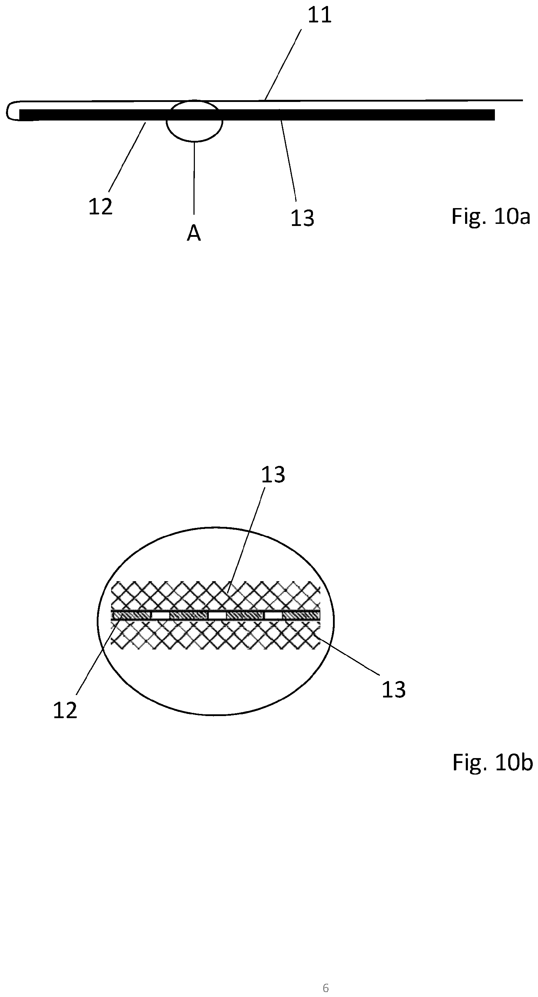

Fig. 10 zeigt in den Teilfiguren 10a und 10b eine alternative Ausbildung eines Abschirmelements, beispielsweise des Abschirmelements in Fig. 9. Die erste äußere Lage 11 ist wiederum aus Edelstahl und umgreift eine zweite äußere Lage 12 an deren Außenkante. Die Lage 12 ist ein Spießblech aus Edelstahl. Die Lage 12 ist zumindest bereichsweise eingebettet in eine Isolationsschicht 13 aus mit NBR (Acrylnitril-Buta-1,3-dien-Kautschuk) beschichteten Glimmerpartikeln als Isolationsschicht.

## Patentansprüche

1. Batteriekasten (2) mit einer Traktionsbatterie mit einer Vielzahl von Batteriemodulen (16), wobei der Batteriekasten (2) eine Unterseite und eine Oberseite sowie einen zwischen Oberseite und Unterseite umlaufenden Randbereich aufweist, wobei in dem Batteriekasten (2) die Vielzahl von Batteriemodulen (16) der Traktionsbatterie angeordnet ist,
**dadurch gekennzeichnet, dass**
zwischen den Batteriemodulen (16) und der Oberseite ein mindestens zweilagiges flächiges Abschirmelement angeordnet ist, das eine erste äußere metallische Lage(11), die der Oberseite des Batteriekastens (2) benachbart angeordnet ist und aus Aluminium oder aus Stahl besteht und eine der ersten äußeren Lage (11) zumindest in Bereichen beabstandete zweite äußere metallische Lage (12) aus einem Metall mit einem Schmelzpunkt Tₛ ≥ 1000°C, die einem Batteriemodul (16) benachbart angeordnet ist, aufweist,
wobei die erste Lage (11) eine Dicke D1 aufweist mit 0,1 mm ≤ D1 ≤ 2,0 mm, und die zweite Lage (12) eine Dicke D2 aufweist mit 0,1 mm ≤ D2 ≤ 1 mm.

2. Batteriekasten (2) nach dem vorhergehenden Anspruch, **dadurch gekennzeichnet, dass** die erste äußere Lage (11) und/oder die zweite äußere Lage (12) aus einem Metallblech oder sonstigem metallischen Material besteht oder dieses im Wesentlichen enthält.

3. Batteriekasten (2) nach einem der vorhergehenden Ansprüche,
**dadurch gekennzeichnet, dass** die erste Lage (11) und/oder die zweite Lage (12) perforiert, insbesondere mikroperforiert, noppaliert und/oder gelocht sind.

4. Batteriekasten (1) nach einem der vorhergehenden Ansprüche,
**dadurch gekennzeichnet, dass** zwischen den beiden äußeren Lagen 11, 12) eine Isolationslage (13) angeordnet ist.

5. Batteriekasten (2) nach dem vorhergehenden Anspruch, **dadurch gekennzeichnet, dass** die Isolationslage (13) ein Material, das bis mindestens 600 °C stabil ist, insbesondere ein Fasermaterial wie Glasfaser, z.B. mit Aluminium bedampfte Glasfasern, Steinwolle, Silikatfasern und dergleichen, Glimmer und/oder eine Pappe enthaltend Füllstoffe und Binder, enthält oder daraus besteht.

6. Batteriekasten (2) nach einem der vorhergehenden Ansprüche,
**dadurch gekennzeichnet, dass** die Isolationslage (13) nicht selbsttragend, insbesondere bindemittelfrei, ist.

7. Batteriekasten (2) nach einem der vorhergehenden Ansprüche,
**dadurch gekennzeichnet, dass** das Metall der ersten und/oder der zweiten äußeren Lage (11, 12) ein Edelstahl oder ein feueraluminierter Stahl oder ein aluminiumplattierter Stahl ist oder daraus besteht.

8. Batteriekasten (2) nach einem der vorhergehenden Ansprüche,
**dadurch gekennzeichnet, dass** die erste Lage (11) eine Dicke D1 aufweist mit 0,3 mm ≤ D1 ≤ 0,6 mm.

9. Batteriekasten (2) nach einem der vorhergehenden Ansprüche,
**dadurch gekennzeichnet, dass** die zweite Lage (12) eine Dicke D2 aufweist mit 0,1 mm ≤ D2 ≤ 0,3 mm, insbesondere D2 = 0,15 mm oder D2 = 0,2mm.

10. Batteriekasten (2) nach einem der vorhergehenden Ansprüche,
**dadurch gekennzeichnet, dass** die Isolationslage (13) eine maximale oder durchschnittliche Dicke D3 aufweist mit 0,5 mm ≤ D3 ≤ 10 mm, insbesondere 0,5 mm ≤ D3 ≤ 3 mm, insbesondere D3 = 0,7 mm oder D3=3 mm.

11. Batteriekasten (2) nach einem der vorhergehenden Ansprüche,
**dadurch gekennzeichnet, dass** die erste Lage (11) und die zweite Lage(12) längs ihrer Außenränder zumindest bereichsweise miteinander verbördelt, verclincht und/oder verschweißt sind.

12. Batteriekasten (2) nach einem der vorhergehenden Ansprüche, **dadurch gekennzeichnet, dass** das Abschirmelement (10a, 10b, 10c) lose oder geklemmt in dem Batteriekasten (2) einliegt.

13. Batteriekasten (2) nach einem der vorhergehenden Ansprüche, **dadurch gekennzeichnet, dass** das Abschirmelement (10a, 10b, 10c) an dem Deckel (4) und/oder der Wanne (3) des Batteriekastens (2) befestigt ist.

## Claims

1. A battery box (2) having a traction battery with a plurality of battery modules (16), wherein the battery box (2) has a lower side and an upper side as well as a circumferential edge region between the upper side and the lower side, wherein the plurality of battery modules (16) of the traction battery are arranged in the battery box (2),
**characterised in that**
an at least two-layer flat shielding element is arranged between the battery modules (16) and the upper side, which shielding element comprises a first outer metallic layer (11), which is arranged adjacent to the upper side of the battery box (2) and consists of aluminium or of steel, and a second outer metallic layer (12), which is spaced apart from the first outer layer (11) at least in regions and consists of a metal with a melting point Tₛ ≥ 1000°C, and which is arranged adjacent to a battery module (16),
wherein the first layer (11) has a thickness D1 of 0.1 mm ≤ D1 ≤ 2.0 mm, and the second layer (12) has a thickness D2 of 0.1 mm ≤ D2 ≤ 1 mm.

2. The battery box (2) according to the preceding claim, **characterised in that** the first outer layer (11) and/or the second outer layer (12) consists of or essentially contains a metal sheet or other metallic material.

3. The battery box (2) according to any one of the preceding claims, **characterised in that** the first layer (11) and/or the second layer (12) is perforated, in particular microperforated, nubbed and/or holed.

4. The battery box (1) according to any one of the preceding claims, **characterised in that** an insulating layer (13) is arranged between the two outer layers 11, 12).

5. The battery box (2) according to the preceding claim, **characterised in that** the insulating layer (13) contains or consists of a material which is stable up to at least 600°C, in particular a fibrous material such as glass fibre, e.g. glass fibres vapour-deposited with aluminium, rock wool, silicate fibres and the like, mica and/or a cardboard containing fillers and binders.

6. The battery box (2) according to any one of the preceding claims, **characterised in that** the insulation layer (13) is not self-supporting, and in particular is free of binding agents.

7. The battery box (2) according to any one of the preceding claims, **characterised in that** the metal of the first and/or the second outer layer (11, 12) is or comprises a stainless steel or a hot-dip aluminized steel or an aluminium-clad steel.

8. The battery box (2) according to any one of the preceding claims, **characterised in that** the first layer (11) has a thickness D1 of 0.3 mm ≤ D1 ≤ 0.6 mm.

9. The battery box (2) according to any one of the preceding claims, **characterised in that** the second layer (12) has a thickness D2 of 0.1 mm ≤ D2 ≤ 0.3 mm, in particular D2 = 0.15 mm or D2 = 0.2 mm.

10. The battery box (2) according to any one of the preceding claims, **characterised in that** the insulation layer (13) has a maximum or average thickness D3 of 0.5 mm ≤ D3 ≤ 10 mm, in particular 0.5 mm ≤ D3 ≤ 3 mm, in particular D3 = 0.7 mm or D3=3 mm.

11. The battery box (2) according to any one of the preceding claims, **characterised in that** the first layer (11) and the second layer (12) are crimped, clinched and/or welded together along their outer edges, at least in certain regions.

12. The battery box (2) according to any one of the preceding claims, **characterised in that** the shielding element (10a, 10b, 10c) is loose or is clamped in the battery box (2).

13. The battery box (2) according to any one of the preceding claims, **characterised in that** the shielding element (10a, 10b, 10c) is fastened to the cover (4) and/or the trough (3) of the battery box (2).

## Revendications

1. Boîtier de batterie (2) avec une batterie de traction avec une pluralité de modules de batterie (16), le boîtier de batterie (2) présentant une face inférieure et une face supérieure ainsi qu'une zone de bordure s'étendant circulairement entre la face supérieure et la face inférieure, la pluralité de modules de batterie (16) de la batterie de traction étant disposée dans le boîtier de batterie (2),
**caractérisé en ce que**
entre les modules de batterie (16) et la face supérieure est disposé un élément de blindage plat à au moins deux couches, qui comprend une première couche métallique extérieure (11), qui est disposée au voisinage de la face supérieure du boîtier de batterie (2) et est constituée d'aluminium ou d'acier et qui comprend une deuxième couche métallique extérieure (12), qui est distante de la première couche extérieure (11) au moins dans des zones, en un métal ayant un point de fusion Tₛ ≥ 1000°C, qui est disposée au voisinage d'un module de batterie (16),
la première couche (11) ayant une épaisseur D1 avec 0,1 mm ≤ D1 ≤ 2,0 mm, et la deuxième couche (12) ayant une épaisseur D2 avec 0,1 mm ≤ D2 ≤ 1 mm.

2. Boîtier de batterie (2) selon la revendication précédente, **caractérisé en ce que** la première couche extérieure (11) et/ou la deuxième couche extérieure (12) est constituée de, ou contient essentiellement, une tôle métallique ou un autre matériau métallique.

3. Boîtier de batterie (2) selon l'une des revendications précédentes, **caractérisé en ce que** la première couche (11) et/ou la deuxième couche (12) sont perforées, notamment microperforées, et/ou estampées.

4. Boîtier de batterie (1) selon l'une des revendications précédentes, **caractérisé en ce qu'**une couche d'isolation (13) est disposée entre les deux couches extérieures (11, 12).

5. Boîtier de batterie (2) selon la revendication précédente, **caractérisé en ce que** la couche d'isolation (13) contient ou est constituée d'un matériau qui est stable jusqu'à au moins 600°C, en particulier un matériau fibreux tel que des fibres de verre, par exemple des fibres de verre métallisées à l'aluminium, de la laine de roche, des fibres de silicate et analogues, du mica et/ou un carton contenant des charges et des liants.

6. Boîtier de batterie (2) selon l'une des revendications précédentes, **caractérisé en ce que** la couche d'isolation (13) n'est pas autoportante, en particulier sans liant.

7. Boîtier de batterie (2) selon l'une des revendications précédentes, **caractérisé en ce que** le métal de la première et/ou de la deuxième couche extérieure (11, 12) est un acier inoxydable ou un acier aluminisé à chaud ou un acier plaqué d'aluminium, ou en est constitué.

8. Boîtier de batterie (2) selon l'une des revendications précédentes, **caractérisé en ce que** la première couche (11) présente une épaisseur D1 avec 0,3 mm ≤ D1 ≤ 0,6 mm.

9. Boîtier de batterie (2) selon l'une des revendications précédentes, **caractérisé en ce que** la deuxième couche (12) présente une épaisseur D2 avec 0,1 mm ≤ D2 ≤ 0,3 mm, notamment D2 = 0,15 mm ou D2 = 0,2 mm.

10. Boîtier de batterie (2) selon l'une des revendications précédentes, **caractérisé en ce que** la couche isolante (13) présente une épaisseur maximale ou moyenne D3 avec 0,5 mm ≤ D3 ≤ 10 mm, notamment 0,5 mm ≤ D3 ≤ 3 mm, notamment D3 = 0,7 mm ou D3= 3 mm.

11. Boîtier de batterie (2) selon l'une des revendications précédentes, **caractérisé en ce que** la première couche (11) et la deuxième couche (12) sont serties, clinchées et/ou soudées entre elles le long de leurs bords extérieurs, au moins par zones.

12. Boîtier de batterie (2) selon l'une des revendications précédentes, **caractérisé en ce que** l'élément de blindage (10a, 10b, 10c) est logé dans le boîtier de batterie (2) de manière lâche ou serrée.

13. Boîtier de batterie (2) selon l'une des revendications précédentes, **caractérisé en ce que** l'élément de blindage (10a, 10b, 10c) est fixé sur le couvercle (4) et/ou le bac (3) du boîtier de batterie (2).
